# EUROPÄISCHE PATENTSCHRIFT

(11) **EP 2 158 629 B1**
(45) Veröffentlichungstag und Bekanntmachung des Hinweises auf die Patenterteilung: **21.03.2012**
(21) Anmeldenummer: 08758914.9
(22) Anmeldetag: 31.05.2008
(51) Int. Cl.: H01M 8/04

(54) **VORRICHTUNG UND VERFAHREN ZUR VERSORGUNG EINER BRENNSTOFFZELLE MIT OXIDATIONSMITTEL**
DEVICE AND METHOD FOR PROVIDING A FUEL CELL WITH AN OXIDIZING AGENT
DISPOSITIF ET PROCÉDÉ POUR ALIMENTER UNE PILE À COMBUSTIBLE EN AGENT OXYDANT

(30) Priorität: 20.06.2007 DE 102007028297
(43) Veröffentlichungstag der Anmeldung: 03.03.2010
(73) Patentinhaber: Daimler AG, 70327 Stuttgart (DE)
(72) Erfinder: STUTE, Manfred, 73730 Esslingen (DE); SUMSER, Siegfried, 70327 Stuttgart (DE)
(74) Vertreter: JENSEN & SON
(86) Internationale Anmeldenummer: PCT/EP2008/004344
(87) Internationale Veröffentlichungsnummer: WO 2008/155011

(56) Entgegenhaltungen:
- WO-A-02/086997
- JP-A- 62 055 421
- US-A- 4 685 287
- US-A1- 2004 161 647

## Beschreibung

Die Erfindung betrifft eine Vorrichtung zur Versorgung einer Brennstoffzelle mit Oxidationsmittel, mit einer zum Kathodenraum der Brennstoffzelle führenden Zuführleitung, mit welcher ein Verdichter verbunden ist, und einer von dem Kathodenraum abführenden Abführleitung, mit welcher Expander verbunden ist, und einer sich zwischen einem Ausgang des Verdichters und einem Eingang des Expanders erstreckenden und die Brennstoffzelle umgehender Bypassleitung, in welcher erstes Strömungswiderstandelement angeordnet ist. Des Weiteren betrifft die Erfindung auch ein Verfahren zur Versorgung einer Brennstoffzelle mit Oxidationsmittel.

Ein derartige Vorrichtung und ein derartiges Verfahren ist aus der DE 102 16 953 A1 bekannt.

Die Bewerkstelligung der Lastanforderungen an eine Brennstoffzelle wird über die Dosierung der thermodynamischen Hauptanschlussgrößen des Oxidationsmittels und des Brennstoffs erreicht. Das Oxidationsmittel wird der Brennstoffzelle mit dem erforderlichen Betriebsdruck in bauraumsparender Weise über hochdrehende Radialverdichter zugeführt. Die Regelung der Luftmenge erfolgt bei der Brennstoffzelle durch die Drehzahlbeeinflussung des oder der Radialverdichter im Zusammenspiel mit der Schluckfähigkeit des Systems stromab der komprimierten Luft. Die Schluckfähigkeit des Systems und damit der Luftdurchsatz wird im Allgemeinen durch eine stromab der Brennstoffzelle platzierte regelbare Gegendruckklappe bestimmt, die den engsten Strömungsquerschnitt des Systems darstellt.

In der DE 102 16 953 A1 übernimmt eine variable Turbine die Aufgabe der Gegendruckklappe, mit dem Vorteil, dass ein beträchtlicher Anteil der sonst verlorenen Drosselenergie über das Turbinenrad rückgewinnbar ist. Dadurch muss der elektrische Motor zum Antrieb des Kompressors und der Turbine im Nennpunkt bis über 30 % weniger Leistungsanforderung bewältigen.

Ein Fahrzeug mit einem derartigen Brennstoffzellensystem und der Expansionsturbine der Luftversorgungseinheit ermöglicht hier einen Verbrauchsvorteil gegenüber der Brennstoffzelle mit Gegendruckklappe in der Größenordnung von etwa 5 % oder mehr. Darüber hinaus können dadurch die Kosten für den Brennstoffzellenstapel um etwa 5 bis 10 % gesenkt werden.

Da die Luftseite nach dem Kompressor mit der Abgasseite der Brennstoffzelle vor einer Varioturbine nur über den dazwischenliegenden Druckverlust verbunden ist, kann eine merklich sensiblere und höhere Einflussnahme auf das Betriebsverhalten der Antriebseinheit durch die Varioturbine im Zusammenspiel mit dem Elektromotor in der Luftversorgungseinheit des Brennstoffzellensystems bewirkt werden.

Es ist Aufgabe der vorliegenden Erfindung, das Betriebsverhalten der Brennstoffzelle durch eine verbesserte Abstimmung der Oxidationsmittelzufuhr zu ermöglichen.

Diese Aufgabe wird durch eine Vorrichtung, welche die Merkmale nach Anspruch 1 aufweist, und ein Verfahren, welches die Merkmale nach Anspruch 10 aufweist, gelöst.

Eine erfindungsgemäße Vorrichtung zur Versorgung einer Brennstoffzelle mit Oxidationsmittel umfasst eine zum Kathodenraum der Brennstoffzelle führende Zuführleitung, mit welcher ein Verdichter verbunden ist. Darüber hinaus umfasst die Vorrichtung eine von dem Kathodenraum abführende Abführleitung, mit welcher ein Expander verbunden ist. Ferner weist die Vorrichtung eine sich zwischen dem Ausgang des Verdichters und einem Eingang des Expanders erstreckende und die Brennstoffzelle umgehende Bypassleitung auf, in welcher ein erstes Strömungswiderstandselement angeordnet ist. Die Vorrichtung umfasst des Weiteren eine **Oxidationsmittelrückführ-**Rezirkulationseinrichtung zum Rückführen von Oxidationsmittel vom Ausgang des Kathodenraums zurück zum Eingang in den Kathodenraum. Die Rezirkulationseinrichtung zweigt in Strömungsrichtung des Oxidationsmittels nach dem Verdichter von der Zuführleitung ab und mündet vor dem Verdichter wieder in die Zuführleitung. Durch diese Ausgestaltung der Vorrichtung einerseits mit der **Oxidationsmittelrückführ-**Rezirkulationseinrichtung und andererseits mit einer Umblasevorrichtung in Form der Bypassleitung, kann die situationsabhängig erforderliche Dosierung bzw. Umleitung oder Rückleitung des Oxidationsmittels und/oder des Kathodengases bedarfsgerecht erfolgen. Dies ermöglicht auch ein verbessertes Betriebsverhalten der Brennstoffzelle, wodurch auch die Energiebilanz des Brennstoffzellensystems verbessert werden kann.

Die Energierückgewinnung in dem Brennstoffzellensystem kann dadurch ebenfalls verbessert werden.

Durch die Vorrichtung kann eine Verbrauchsbegünstigung durch eine wirkungsgradoptimale Einstellung der Betriebslinie der Brennstoffzelle ermöglicht werden. Die Betriebslinie der Brennstoffzelle kann durch das Oxidationsmittelversorgungssystem daher möglichst optimal beeinflusst werden.

Vorzugsweise ist der Expander eine Turbine mit einem variablen Turbinenleitgitter. Neben den globalen Vorteilen hinsichtlich des Kraftstoffverbrauchs der Antriebseinheit bietet eine derartige Expansionsturbine hinsichtlich der Luftmengenregelung bei angepasster Luftseite sehr große Vorteile, die im Zusammenhang mit spezifischen Betriebszuständen des Brennstoffzellensystems stehen. Insbesondere seien hierbei die Betriebszustände der Lastregelung, des Kaltstarts mit der anschließenden Aufwärmphase bzw. Warmlaufphase, der Leerlaufbetrieb oder die komplette Lastabschaltung genannt. Durch die erfindungsgemäße Vorrichtung mit der spezifischen Ausgestaltung des Expanders als Varioturbine, können markante Betriebsweisen, wie sie oben genannt sind, energieeffizienter und optimierter erfolgen.

Vorzugsweise ist ein in der **Oxidationsmittelrückführ-**Rezirkulationseinrichtung angeordnetes Strömungswiderstandselement zumindest zeitweise in einer Aufwärmphase der Brennstoffzelle und/oder zumindest zeitweise in einer Leerlaufphase der Brennstoffzelle geöffnet.

Zusätzlich oder anstatt dazu kann vorgesehen sein, dass ein in der Bypassleitung angeordnetes zweites Strömungswiderstandselement zumindest zeitweise in einer Aufwärmphase der Brennstoffzelle und/oder zumindest zeitweise in einer Leerlaufphase der Brennstoffzelle geöffnet ist. Bedarfs- und situationsabhängig kann somit die spezifizierte Oxidationsmittelleitung und Zuführung zur Brennstoffzelle eingestellt werden, so dass ein optimiertes Betriebsverhalten des Systems erreicht werden kann.

Vorzugsweise ist in der Aufwärmphase und der Leerlaufphase der Brennstoffzelle ein Betriebszustand eines Verdichters eingestellt, welcher durch einen niedrigen Wirkungsgrad des Verdichters und dessen Betrieb nahe an der Pumpgrenze charakterisiert ist. Dadurch kann schnellstmöglich die notwendige Betriebstemperatur der Brennstoffzelle in der Warmlaufphase erzeugt werden. Die Energiezuführung zur Temperaturerhöhung mittels des Rezirkulationsbetriebs oder des Umblasebetriebs zum Expander der Luftversorgungseinrichtung erfordert jedoch einen entsprechenden Strombedarf am Elektromotor, welcher zum Antrieb des Kompressors und des Expanders vorgesehen ist.

In der Leerlaufphase der Brennstoffzelle kann ebenfalls eine Öffnung der **Oxidationsmittelrückführ-**Rezirkulationseinrichtung und/oder der Bypassleitung vorgesehen sein, wobei die Umblasung über die Bypassleitung zum Expander hinsichtlich des Verbrauchs als die energetisch günstigere Maßnahme im Vergleich zur Öffnung der Rezirkulationseinrichtung anzusehen ist.

Vorzugsweise ist bei einer Lastabschaltung der Brennstoffzelle oder in einer Phase, in der die Brennstoffzelle kein oder nur eine geringe Menge von Oxidationsmittel benötigt, der Expander vollständig oder nahezu vollständig geschlossen. Auch dadurch kann das gesamte Betriebsverhalten optimiert werden und das Energiemanagement verbessert werden.

Vorzugsweise ist der Verdichter bei einer Lastabschaltung der Brennstoffzelle oder in einer Phase, in der die Brennstoffzelle kein oder nur eine geringe Menge von Oxidationsmittel benötigt, im Betriebszustand des Verdichterpumpens betreibbar. Gerade in dem Falle, in dem noch ein gewisser Betriebsdruck der Brennstoffzelle zur Verfügung gestellt werden soll, kann somit erreicht werden, dass der Kompressor bzw. Verdichter eine gewisse Zeit im instabilen Bereich mit gemäßigten Pump-Druckschwankungen ohne Schadensrisiko betreibbar ist. Ein eigentlich somit unerwünschter Betriebszustand des Verdichters, nämlich das Verdichterpumpen, kann dadurch vorteilhaft genutzt werden.

Vorzugsweise sind im Betriebszustand des Verdichterpumpens die vor und nach dem Verdichter vorhandenen Oxidationsmittelvolumen auf ein kontrollierbares Verdichterpumpen abgestimmt. Insbesondere ist diese Volumenabstimmung durch eine Rückführeinrichtung zur Rückführung des aus dem Kathodenraum abgeführten Kathodengases in den Kathodenraum zurück erreichbar. Durch die Abstimmung dämpfender Volumina vor und nach dem Verdichter kann ein relativ gutmütiges Verhalten des Verdichters im instabilen unteren Drehzahlbereich erzielt werden. Dadurch ist bei kleinem Massendurchsatz und notwendigem Druck ein entsprechender Betrieb möglich. Außerdem kann die Oxidationsmittelsäule im Brennstoffzellenstapel zum Schwingen gebracht werden, und wie von einer Brennstoffzelle gefordert, Oxidationsmittel verbraucht werden.

Vorzugsweise sind die für die Betriebszustände der Aufwärmphase und/oder der Leerlaufphase und/oder der Lastabschaltung und/oder der Phase, in der die Brennstoffzelle kein oder eine nur geringe Menge von Oxidationsmittel benötigt, für die Wirkungsgradverbesserung der Brennstoffzelle angepassten spezifischen Drehzahlwerte des Verdichters und die spezifischen Querschnitteinstellungen der Strömungsquerschnittes des Expanders in einem Kennfeld dargestellt, welches in einer Steuer- und/oder Regeleinheit der Vorrichtung abgelegt ist. Gerade dadurch kann somit vorab das Ermitteln der optimalen Parameterwerte festgestellt werden und in dem Kennfeld manifestiert werden. Durch Ablegen dieses Kennfelds in einer entsprechenden Einheit, kann dann stets auf die Kennfelddaten in den spezifischen Betriebszuständen zurückgegriffen werden und die im Hinblick auf die Wirkungsgradoptimierung und somit auch energieeffiziente Betriebsweise erforderlichen Betriebseinstellungen der beteiligten Komponenten genau ermöglicht werden.

Bei einem erfindungsgemäßen Verfahren zur Versorgung einer Brennstoffzelle mit Oxidationsmittel werden die Bypassleitung und/oder eine **Oxidationsmittelrückführ-**Rezirkulationseinrichtung zum Rückführen von Oxidationsmittel, welche in Strömungsrichtung des Oxidationsmittels nach einem Verdichter von der Zuführleitung abzweigt und vor dem Verdichter wieder in die Zuführleitung mündet, in spezifischen Betriebszuständen der Brennstoffzelle zumindest zeitweise geöffnet. Die Brennstoffzelle wird dabei mit einer im Kathodenraum der Brennstoffzelle führenden Zuführleitung verbunden, in welcher ein Verdichter angeordnet ist. Darüber hinaus wird der Kathodenraum mit einer von der Brennstoffzelle wegführenden Abführleitung verbunden, in welcher ein Expander angeordnet ist. Die Bypassleitung erstreckt sich zwischen dem Ausgang des Verdichters und dem Eingang des Expanders, wobei in der Bypassleitung ein erstes Strömungswiderstandselement angeordnet ist. Durch das erfindungsgemäße Verfahren kann die Betriebsoptimierung in spezifischen Betriebszuständen erreicht werden und dadurch auch das Energiemanagement des Systems verbessert werden.

Vorzugsweise werden die Bypassleitung und/oder die **Oxidationsmittelrückführ-**Rezirkulationseinrichtung in der Aufwärmphase der Brennstoffzelle und/oder in der Leerlaufphase der Brennstoffzelle geöffnet. Es kann auch vorgesehen sein, dass die Bypassleitung und/oder die **Oxidationsmittelrückführ-**Rezirkulationseinrichtung bei einer Lastabschaltung der Brennstoffzelle oder in einer Phase, in der die Brennstoffzelle kein oder nur eine geringe Menge von Oxidationsmittel benötigt, geöffnet wird.

Vorzugsweise werden in den spezifischen Betriebszuständen der Brennstoffzelle zu einem in einer Steuer- und/oder Regeleinheit angelegten Kennfeld die für die Wirkungsgradsverbesserung der Brennstoffzelle zugeordneten Drehzahlen des Verdichters und die Strömungsquerschnitte des Expanders zur Einstellung des erforderlichen Betriebs der Brennstoffzelle eingestellt.

Vorzugsweise wird in der Aufwärmphase und/oder der Leerlaufphase der Brennstoffzelle der Verdichter mit einem niedrigen Wirkungsgrad und nahe seiner Pumpgrenze betrieben.

In der Phase der Lastabschaltung der Brennstoffzelle und/oder in einer Phase, in der die Brennstoffzelle kein oder nur eine geringe Menge von Oxidationsmittel benötigt, wird vorzugsweise der Strömungsquerschnitt des Expanders vollständig oder nahezu vollständig geschlossen.

Ein Ausführungsbeispiel der Erfindung wird nachfolgend anhand schematischer Zeichnungen näher erläutert. Dabei zeigen:
- Fig. 1: eine schematische Darstellung einer erfindungsgemäßen Vorrichtung;
- Fig. 2: ein Kennfeld eines Verdichters der erfindungsgemäßen Vorrichtung.

In den Figuren werden gleiche oder funktionsgleiche Elemente mit den gleichen Bezugszeichen versehen.

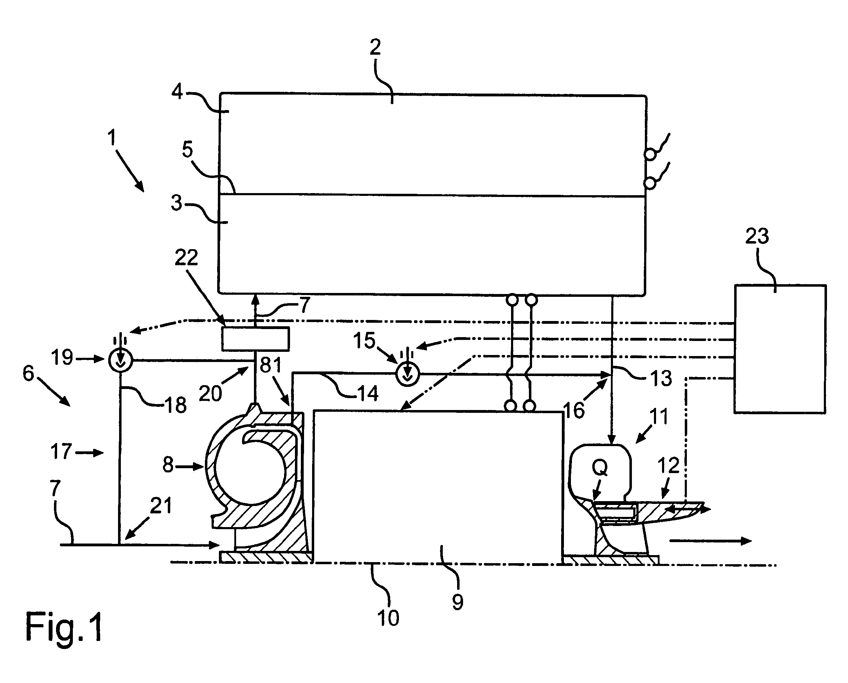

In Fig. 1 ist ein Brennstoffzellensystem 1 gezeigt, welches eine Brennstoffzelle 2 aufweist. Üblicherweise sind mehrere Brennstoffzellen 2 vorgesehen, welche einen Brennstoffzellenstapel bilden. Die Brennstoffzelle 2 ist im Ausführungsbeispiel als PEM-Brennstoffzelle ausgebildet. Dies soll jedoch im Hinblick auf die Erfindung nicht einschränkend verstanden werden.

Das Brennstoffzellensystem 1 ist als mobiles Brennstoffzellensystem ausgebildet und im Ausführungsbeispiel in einem Fahrzeug angeordnet.

Die Brennstoffzelle 2 umfasst einen Kathodenraum 3 und einen Anodenraum 4, welcher von dem Kathodenraum 3 durch eine Membran 5 separiert ist. Darüber hinaus umfasst das Brennstoffzellensystem 1 eine Vorrichtung 6 des zur Versorgung der Brennstoffzelle 2 mit einem Oxidationsmittel, beispielsweise Sauerstoff oder Luft. Die Vorrichtung 6 umfasst eine Zuführleitung 7, in welcher ein Verdichter 8 angeordnet ist. Über die Zuführleitung 7 wird das Oxidationsmittel zur Brennstoffzelle 2 geleitet.

Der Verdichter 8 ist über eine Welle 10 mit einem Elektromotor 9 verbunden, mittels welchem der Verdichter 8 angetrieben wird. Auf der gemeinsamen Welle 10 ist des Weiteren ein Expander 11 angeordnet, welcher im Ausführungsbeispiel als Turbine mit einem variablen Turbinenleitgitter 12 ausgebildet ist. Der nachfolgend als Turbine 11 bezeichnete Expander wird ebenfalls über die Welle mit dem Elektromotor 9 verbunden.

Durch das Leitgitter 12 ist der Querschnitt Q des Strömungskanals in der Turbine 11 variabel veränderbar.

Von der Brennstoffzelle 2 führt eine Abführleitung 13 zur Turbine 11, wobei über diesen Pfad Kathodengas vom Kathodenraum 3 abgeführt wird.

Die Vorrichtung 6 umfasst des Weiteren eine Bypassleitung 14, welche sich zwischen einem Ausgang 81 des Verdichters 8 und einem Eingang der Turbine 11 erstreckt. Im Ausführungsbeispiel mündet die Bypassleitung 14 an der Einmündung 16 in die Abführleitung 13. In der Bypassleitung 14 ist ein als Strömungswiderstandselement ausgebildetes Ventil 15 angeordnet. Durch die Bypassleitung 14 ist die Brennstoffzelle 2 im Hinblick auf einen Oxidationsmitteltransport umgehbar.

Des Weiteren umfasst die Vorrichtung 6 eine **Oxidationsmittelrückführ-**Rezirkulationseinrichtung 17, mittels welcher eine Rückführung von Oxidationsmittel vom Ausgang des Verdichters 8 zurück in dessen Eingang ermöglicht wird. Die Rezirkulationseinrichtung 17 umfasst einen Rückführleitung 18, welche an einer Abzweigung 20 stromab des Verdichters 8 von der Zuführleitung 7 abzweigt und an einer Einmündung 21 stromauf des Verdichters 8 in die Zuführleitung 7 mündet. In der Rückführleitung 18 ist ein Strömungswiderstandselement angeordnet, welches im Ausführungsbeispiel als Rezirkulationsventil 19 ausgebildet ist.

Zwischen der Abzweigung 20 und dem Eingang des Kathodenraums 3 ist darüber hinaus ein Ladeluftkühler 22 in der Zuführleitung 7 angeordnet.

Das Brennstoffzellensystem 1 umfasst des Weiteren eine Steuer- und/oder Reglereinheit 23 mittels welcher die Ventile 15 und 19, der Elektromotor 9 und das Leitgitter 12 der Turbine 11 steuerbar bzw. regelbar sind.

Die Ventile 15 und/oder 19 sind zumindest zeitweise in einer Aufwärmphase der Brennstoffzelle 2 nach einem Kaltstart und/oder einer Leerlaufphase der Brennstoffzelle 2 geöffnet.

In der Aufwärmphase und der Leerlaufphase der Brennstoffzelle 2 ist ein Betriebszustand des Verdichters 8 eingestellt, welcher durch einen niedrigen Wirkungsgrad des Verdichters 8 und nahe dessen Pumpgrenze charakterisiert ist. Bei einer Lastabschaltung der Brennstoffzelle 2 oder in einer Phase, in der die Brennstoffzelle 2 kein oder nur eine geringe Menge von Oxidationsmittel benötigt, ist die Turbine 11 im Querschnitt Q vollständig oder nahezu vollständig geschlossen. Diesbezüglich ist das Leitgitter 12 entsprechend eingestellt.

Der Verdichter 8 ist bei einer Lastabschaltung der Brennstoffzelle 2 oder in einer Phase, in der die Brennstoffzelle 2 kein oder eine nur geringe Menge von Oxidationsmittel benötigt, im Betriebszustand des Verdichterpumpens betreibbar. In diesem Betriebszustand des Verdichterpumpens sind die vor und nach dem Verdichter 8 vorhandenen Oxidationsmittelvolumen auf kontrollierbares Verdichterpumpverhalten abgestimmt. Dies wird im Ausführungsbeispiel dadurch erreicht, dass eine nicht dargestellte Rückführeinrichtung vorgesehen ist, mit welcher das aus dem Kathodenraum 3 abgeführte Kathodengas wieder in den Kathodenraum an dessen Eingang rückgeführt werden kann.

In der Steuer- und/oder Regeleinheit 23 ist ein Kennfeld abgelegt, in dem die für die Betriebszustände der Aufwärmphase und/oder der Leerlaufphase und/oder der Lastabschaltung und/oder der Phase der Brennstoffzelle in der sie kein oder nur eine geringe Menge von Oxidationsmittel benötigt, im Hinblick auf die Wirkungsgradverbesserung der Brennstoffzelle 2 angepassten spezifischen Drehzahlwerte des Verdichters 8 und die spezifischen Querschnitteinstellungen Q der Turbine 11 dargestellt sind.

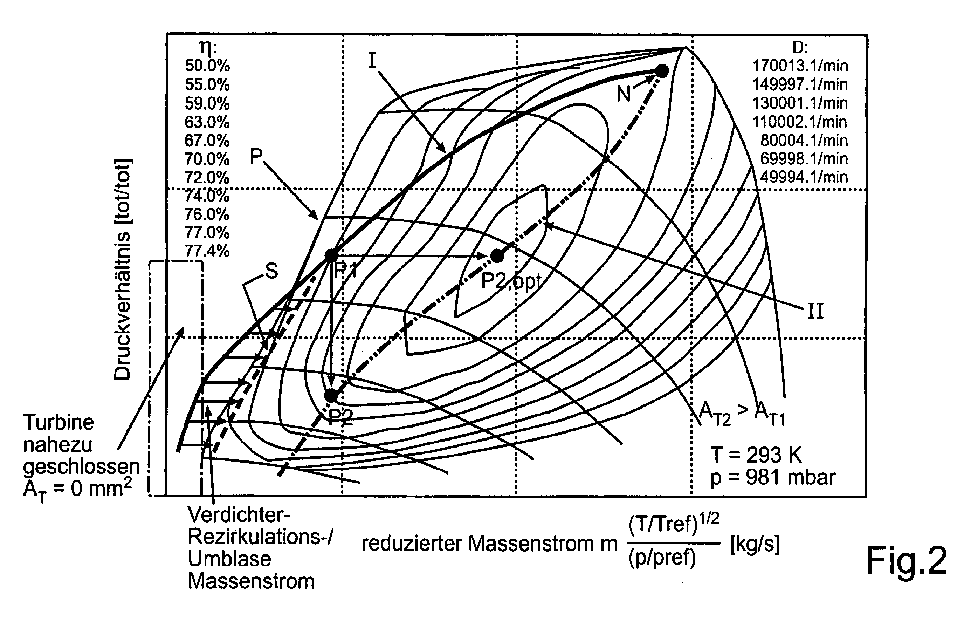

Ein beispielhaftes Verdichterkennfeld ist in Fig. 2 dargestellt. Die nachfolgend aufgeführten Verfahren sind mit dem dargelegten Luftversorgungssystem sinnvoll durchführbar, wobei diese über die Betriebslinieneintragungen im Verdichterkennfeld gemäß Fig. 2 nachvollzogen werden könne.

Mittels der Einstellung des engsten Querschnitts Q der Turbine 11, welche beispielsweise eine Axialschieberturbine oder eine Drehschauffler-Varioturbine sein kann, mit der angepassten Verdichterdrehzahl lassen sich Betriebslinien des Verdichters 8 erzeugen, die sich nahe im wirkungsgradoptimalen Bereich befinden. Die Betriebslinie der Brennstoffzelle 2 lässt sich durch das Luftversorgungssystem gemäß der Vorrichtung 6 optimal beeinflussen. Hierbei werden die optimalen Drücke und Temperaturen in der Brennstoffzelle 2 mit dem gewünschten Luftdurchsatz befriedigt. Als Beispiel für einen nahezu optimalen Verlauf einer Betriebslinie der Brennstoffzelle 2 im Verdichterkennfeld wird durch die Turbinenführung gemäß dem Verlauf II mit dem engsten Querschnitt A_{T2} erzeugt. Falls der Luftmassendurchsatz und das Verdichterdruckverhältnis zu dem optimalen Brennstoffzellenbedarf passt, ist davon auszugehen, dass das Gesamtsystem durch den optimalen Ladungswechsel sein Verbrauchsminimum zeigt. Voraussetzung hierbei ist, dass die variable Turbine 11 zur genannten Betriebslinie mit wirkungsgradoptimal ausgelegt ist.

Häufig ergeben sich von der Anforderung der Brennstoffzelle 2 Luftmassendurchsatz-Verhältnis-Paarungen, die dem in Fig. 2 gezeigten Verlauf I entsprechen. Bei diesen Betriebslinienverlauf wird der engste Querschnitt des Brennstoffzellensystems 1, der sich in der variablen Turbine 11 im beweglichen Austritt des Leitgitters 12 befindet, gegenüber der Optimallinie merklich verkleinert, um die Druckanforderungen bei gegebenem Massendurchsatz der Brennstoffzelle 2 zu erfüllen. Bei vorgegebenem Nennpunkt N der Brennstoffzelle 2 überschneidet die Betriebslinie gemäß dem Verlauf I im niederen Durchsatzbereich die Pumpgrenze P und es muss im instabilen Bereich des Verdichters 8 ebenfalls die Fähigkeit der stabilen Druckbereitstellung zugeordnet werden.

In diesem kritischen Betriebsbereich wird das Rezirkulationsventil 19 der Rezirkulationseinrichtung 17 soweit geöffnet, dass der Verdichterdurchsatz über den Pumpgrenzendurchsatz steigt. Die Verdichterschlucklinie ist in diesem Bereich durch die Linie S charakterisiert.

Die Brennstoffzellenschlucklinie mit dem erforderlichen Druck befindet sich jenseits des stabilen Verdichterbetriebsbereichs, was die Fähigkeit der stabilen Druckbereitstellung des Verdichters 8 nicht stört.

Eine weitere Betriebsweise, die im Verdichterkennfeld gemäß Fig. 2 nach rechts der Pumpgrenze P in den stabilen Verdichterbereich ausweichen kann, ist der sogenannte Umblasebetrieb. Dabei wird ein Teilstrom, der im oben genannten Fall in den Verdichter 8 in dessen Eintrittsbereich geblasen wurden, jetzt jenseits der Brennstoffzelle 2 direkt vor der Turbine 11 eingeblasen. Dies geschieht über die Bypassleitung 14 und das entsprechend geöffnete Ventil 15. Da die Brennstoffzelle 2 in dieser Phase bypassiert wird, ist ein Druckverhältnis vom Verdichteraustritt 81 direkt zur Turbine 11 vorhanden. Der Aufwand des Elektromotors 9 ist um die Energieumsetzungsquote in technische Arbeit des in der Turbine 11 zu nutzenden Umblaseluftstroms gemindert. In bestimmten Betriebsphasen wird die Umblasung über die Bypassleitung 14 deshalb dem energieaufwändigeren verdichterseitigen Rezirkulationsbetrieb über die Rezirkulationseinrichtung 17 vorgezogen.

In der Aufwärmphase der Brennstoffzelle 2 nach deren Kaltstart wird der niedere Wirkungsgrad im Bereich des Verdichters 8 nahe der Pumpgrenze im Bereich der Linie S ausgenutzt, um schnellstmöglich die notwendige Betriebstemperatur der Brennstoffzelle 2 zu erzeugen. Die Energiezuführung zur Temperaturerhöhung mittels dieses Rezirkulationsbetriebs über die Rezirkulationseinrichtung 17 oder des Umblasebetriebs über die Bypassleitung 14 geht zu Lasten eines relativ hohen Einsatzes am Elektromotor 9.

Im Leerlaufbetrieb der Brennstoffzelle 2 wird die oben genannte Vorgehensweise während der Aufwärmphase der Brennstoffzelle 2 genutzt, wobei diesbezüglich die Umblasung über die Bypassleitung 14 zur Turbine 11 hinsichtlich des Verbrauchs energetisch als die günstigere Maßnahme anzusehen ist.

Bei einer Lastabschaltung oder in Phasen, in denen die Brennstoffzelle 2 kein oder nur geringste Mengen an Oxidationsmittel benötigt, ist vorgesehen, dass die Turbine 11 vollständig oder nahezu vollständig geschlossen ist. Im Fall, dass noch ein gewisser Betriebsdruck der Brennstoffzelle 2 zur Verfügung gestellt werden muss, ist vorgesehen, dass der Verdichter 8 eine gewisse Zeit im instabilen Bereich mit gemäßigten Pump-Druckschwankungen ohne Schadensrisiko betreibbar ist. Durch die Abstimmung dämpfender Volumina vor und nach dem Verdichter 8 kann ein relativ gutmütiges Verhalten des Verdichters 8 im instabilen unteren Drehzahlbereich erzielt werden. Dies wird insbesondere durch die bereits oben genannte Kathoden-Rückführvorrichtung, mit welcher das Kathodengas vom Ausgang des Kathodenraums wieder an den Eintritt des Kathodenraums rückgeführt werden kann, erreicht. Dadurch ist bei kleinem Massendurchsatz und notwendigem Druck ein entsprechender Betrieb möglich. Außerdem kann die Oxidationsmittelsäule in der Brennstoffzelle 2 bzw. dem Brennstoffzellenstapel zum Schwingen gebracht werden und Oxidationsmittel verbraucht werden, wie dies von der Brennstoffzelle 2 gefordert ist.

Wie bei der oben genannten Erläuterung der frei anwählbaren Betriebslinien im Verdichterkennfeld gemäß Fig. 2 mittels der Regelung der variablen Turbine 11 und der Drehzahl des Verdichters 8 über den Elektromotor 9 bereits erwähnt, soll nochmals anhand der Betriebspunkte P₁, P₂ und P_{2,OPT} auf diesen enormen Vorteil dieser variablen Turbine 11 mit dem Hauptmerkmal der Energierückgewinnung hingewiesen werden.

Davon ausgehend, dass der Betriebspunkt P₁ der "Optimalpunkt der Verbrennung" ist, und der Betriebspunkt P₂ der "Optimalpunkt des Ladungswechsels" (optimaler Verdichter- und Turbinenwirkungsgrad) bei gleichem Massendurchsatz, und der Betriebspunkt P_{2,OPT} der "Optimalpunkt des Ladungswechsels bei gleichem Druckverhältnis" ist, lässt sich der optimale Gesamtwirkungsgrad der Brennstoffzelle 2 mit der Oxidationsmittelversorgung zusammen für den betrachteten Betriebspunkt versuchsmäßig über die Variation der Drehzahl des Verdichters 8 und des Variierens des Querschnitts Q der variablen Turbine 11 bestimmen. Dies kann auch simulatorisch erfolgen.

Das Ergebnis der Kombination der Drehzahl des Verdichters 8, und der Stellung des Leitgitters 12 in der Turbine 11 im Hinblick auf die Veränderung des Strömungsquerschnitts Q für den optimalen Druck und den Optimaldurchsatz des Oxidationsmittels an bzw. durch die Brennstoffzelle 2 ist in der Steuer- und/oder Regeleinheit 23 elektronisch als Kennfeld hinterlegt, um den optimalen, verbrauchsgünstigen Fahrbetrieb gewährleisten zu können.

## Patentansprüche

1. Vorrichtung zur Versorgung einer Brennstoffzelle (2) mit einem Oxidationsmittel, mit einer zum Kathodenraum (3) der Brennstoffzelle (2) führenden Zuführleitung (7), mit welcher ein Verdichter (8) verbunden ist, und einer von dem Kathodenraum (3) abführenden Abführleitung (13), mit welcher ein Expander (11) verbunden ist, und einer mit sich zwischen einem Ausgang (81) des Verdichters (8) und einem Eingang des Expanders (11) erstreckenden und die Brennstoffzelle (2) umgehende Bypassleitung (14), in welcher ein erstes Strömungswiderstandselement (15) angeordnet ist,
**gekennzeichnet durch**
eine Oxidationsmittelrückführ-Rezirkulationseinrichtung (17), welche in Strömungsrichtung des Oxidationsmittels nach dem Verdichter (8) von der Zuführleitung (7) abzweigt und vor dem Verdichter (8) wieder in die Zuführleitung (7) mündet.

2. Vorrichtung nach Anspruch 1,
**dadurch gekennzeichnet, dass**
der Expander eine Turbine (11) mit einem variablen Turbinenleitgitter (12) ist.

3. Vorrichtung nach Anspruch 1 oder 2,
**dadurch gekennzeichnet, dass**
ein in der Oxidationsmittelrückführ-Rezirkulationseinrichtung (17) angeordnetes zweites Strömungswiderstandselement (19) zumindest zeitweise in einer Aufwärmphase der Brennstoffzelle (2) und/oder zumindest zeitweise in einer Leerlaufphase der Brennstoffzelle (2) geöffnet ist.

4. Vorrichtung nach einem der vorhergehenden Ansprüche,
**dadurch gekennzeichnet, dass**
das in der Bypassleitung (14) angeordnete erste Strömungswiderstandselement (15) zumindest zeitweise in einer Aufwärmphase der Brennstoffzelle (2) und/oder zumindest zeitweise in einer Leerlaufphase der Brennstoffzelle (2) geöffnet ist.

5. Vorrichtung nach einem der vorhergehenden Ansprüche,
**dadurch gekennzeichnet, dass**
bei einer Lastabschaltung der Brennstoffzelle (2) oder in einer Phase, in der die Brennstoffzelle (2) kein Oxidationsmittel benötigt, der Expander (11) geschlossen ist.

6. Vorrichtung nach Anspruch 5,
**dadurch gekennzeichnet, dass**
der Verdichter (8) bei einer Lastabschaltung der Brennstoffzelle (2) oder in einer Phase, in der die Brennstoffzelle (2) kein oder nur eine geringe Menge von Oxidationsmittel benötigt, im Betriebzustand des Verdichterpumpens betreibbar ist.

7. Vorrichtung nach Anspruch 6,
**dadurch gekennzeichnet, dass**
im Betriebszustand des Verdichterpumpens die vor und nach dem Verdichter (8) vorhandenen Oxidationsmittelvolumen auf ein kontrollierbares Verdichterpumpen abgestimmt sind, insbesondere durch eine Rückführeinrichtung zur Rückführung des aus dem Kathodenraum (3) abgeführten Kathodengases in den Kathodenraum (3).

8. Vorrichtung nach einem der vorhergehenden Ansprüche,
**dadurch gekennzeichnet, dass**
den im Hinblick auf eine Wirkungsgradverbesserung der Brennstoffzelle (2) durch die Parameter Oxidationsmitteldruck und Oxidationsmittel-Massenstrom definierten Betriebszuständen der Brennstoffzelle (2) spezifische Drehzahlwerte des Verdichters (8) und spezifische Einstellungen eines Querschnitts (Q) des Expanders (11) zugeordnet sind, und diese Zuordnungen in einem Kennfeld dargestellt sind, welches in einer Steuer- und/oder Regeleinheit (23) der Vorrichtung (6) abgelegt ist.

9. Vorrichtung nach einem der vorhergehenden Ansprüche,
**dadurch gekennzeichnet, dass**
die für die Betriebszustände der Aufwärmphase und/oder der Leerlaufphase und/oder der Lastabschaltung und/oder der Phase, in der die Brennstoffzelle (2) kein Oxidationsmittel benötigt, zur Wirkungsgradverbesserung der Brennstoffzelle (2) angepassten spezifischen Drehzahlwerte des Verdichters (8) und die spezifischen Einstellungen des Querschnitts (Q) des Expanders (11) in einem Kennfeld dargestellt sind, welches in einer Steuer- und/oder Regeleinheit (23) der Vorrichtung (6) abgelegt ist.

10. Verfahren zur Versorgung einer Brennstoffzelle gemäß Anspruch 1 mit einem Oxidationsmittel,
**dadurch gekennzeichnet, dass**
die Bypassleitung (14) und/oder eine Oxidationsmittelrückführ-Rezirkulationseinrichtung (17) in spezifischen Betriebszuständen der Brennstoffzelle (2) zumindest zeitweise geöffnet wird.

11. Verfahren nach Anspruch 10,
**dadurch gekennzeichnet, dass**
die Bypassleitung (14) und/oder die Rezirkulationseinrichtung (17) in der Aufwärmphase der Brennstoffzelle (2) geöffnet werden.

12. Verfahren nach Anspruch 10 oder 11,
**dadurch gekennzeichnet, dass**
die Bypassleitung (14) und/oder die Oxidationsmittelrückführ-Rezirkulationseinrichtung (17) in der Leerlaufphase der Brennstoffzelle (2) geöffnet werden.

13. Verfahren nach einem der Ansprüche 10 bis 12,
**dadurch gekennzeichnet, dass**
die Bypassleitung (14) und/oder die Oxidationsmittelrückführ-Rezirkulationseinrichtung (17) bei Lastabschaltung der Brennstoffzelle (2) oder in einer Phase, in der die Brennstoffzelle (2) kein oder Oxidationsmittel benötigt, geöffnet werden.

14. Verfahren nach einem der Ansprüche 10 bis 13,
**dadurch gekennzeichnet, dass**
in den spezifischen Betriebszuständen der Brennstoffzelle (2) aus einem in einer Steuer- und/oder Regeleinheit (23) abgelegten Kennfeld die für eine Wirkungsgradverbesserung der Brennstoffzelle (2) zugeordneten Drehzahlen des Verdichters (8) und die Querschnitte (Q) des Expanders (11) zur Einstellung des erforderlichen Betriebspunkts der Brennstoffzelle (2) eingestellt werden.

15. Verfahren nach einem der Ansprüche 10 bis 14,
**dadurch gekennzeichnet, dass**
in der Phase der Lastabschaltung der Brennstoffzelle (2) und/oder in einer Phase, in der die Brennstoffzelle (2) kein Oxidationsmittel benötigt, der Querschnitt (Q) des Expanders (11) geschlossen wird.

## Claims

1. Device for providing a fuel cell (2) with an oxidising agent, comprising a supply line (7) leading to the cathode compartment (3) of the fuel cell (2), to which supply line (7) a compressor (8) is connected, and further comprising an outlet line (13) leading away from the cathode compartment (3), to which outlet line (13) an expander (11) is connected, and further comprising a bypass line (14) extending between an outlet (81) of the compressor (8) and an inlet of the expander (11) and bypassing the fuel cell (2), in which bypass line (14) a first flow resistance element (15) is located,
**characterised by**
an oxidising agent recycling recirculation device (17) which branches off the supply line (7) downstream of the compressor (8) in the flow direction of the oxidising agent and rejoins the supply line (7) upstream of the compressor (8).

2. Device according to claim 1,
**characterised in that**
the expander is a turbine (11) with a variable turbine guide grid (12).

3. Device according to claim 1 or 2,
**characterised in that**
a second flow resistance element (19) provided in the oxidising agent recycling recirculation device (17) is open at least intermittently in a warm-up phase of the fuel cell (2) and/or at least intermittently in an idling phase of the fuel cell (2).

4. Device according to any of the preceding claims,
**characterised in that**
the first flow resistance element (15) provided in the bypass line (14) is open at least intermittently in a warm-up phase of the fuel cell (2) and/or at least intermittently in an idling phase of the fuel cell (2).

5. Device according to any of the preceding claims,
**characterised in that**
the expander (11) is closed in a load shut-down of the fuel cell (2) or in a phase in which the fuel cell (2) does not require any oxidising agent.

6. Device according to claim 5,
**characterised in that**
the compressor (8) can be operated in the compressor pumping operating state in a load shut-down of the fuel cell (2) or in a phase in which the fuel cell (2) requires no or only a small amount of oxidising agent.

7. Device according to claim 6,
**characterised in that**
in the compressor pumping operating state, the oxidising agent volumes present upstream and downstream of the compressor (8) are adjusted to a controllable compressor pumping action, in particular by means of a recycling device for returning the cathode gas discharged from the cathode compartment (3) into the cathode compartment (3).

8. Device according to any of the preceding claims,
**characterised in that**
specific speed values of the compressor (8) and specific settings of a cross-section (Q) of the expander (11) are assigned to the operating states of the fuel cell (2) defined by the parameters oxidising agent pressure and oxidising agent mass flow with a view towards improving the efficiency of the fuel cell (2), and **in that** these assignments are represented in a characteristic map which is stored in an open- and/or closed-loop control unit (23) of the device (6).

9. Device according to any of the preceding claims,
**characterised in that**
the specific speed values of the compressor (8) and the specific settings of the cross-section (Q) of the expander (11) which are adjusted for the operating states warm-up phase and/or idling phase and/or load shut-down and/or for the phase in which the fuel cell (2) does not require any oxidising agent for improving the efficiency of the fuel cell (2) are represented in a characteristic map which is stored in an open- and/or closed-loop control unit (23) of the device (6).

10. Method for providing a fuel cell according to claim 1 with an oxidising agent,
**characterised in that**
the bypass line (14) and/or an oxidising agent recycling recirculation device (17) is/are at least intermittently opened in specific operating states of the fuel cell (2).

11. Method according to claim 10,
**characterised in that**
the bypass line (14) and/or the recirculation device (17) is/are opened in the warm-up phase of the fuel cell (2).

12. Method according to claim 10 or 11,
**characterised in that**
the bypass line (14) and/or the oxidising agent recycling recirculation device (17) is/are opened in the idling phase of the fuel cell (2).

13. Method according to any of claims 10 to 12,
**characterised in that**
the bypass line (14) and/or the oxidising agent recycling recirculation device (17) is/are opened at a load shut-down of the fuel cell (2) or in a phase in which the fuel cell (2) does not require any oxidising agent.

14. Method according to any of claims 10 to 13,
**characterised in that**
in the specific operating states of the fuel cell (2), the speeds of the compressor (8) and the cross-sections (Q) of the expander (11) required for the improvement of the efficiency of the fuel cell (2) are set from a characteristic map stored in an open- and/or closed-loop control unit (23) for adjusting the required operating point of the fuel cell (2).

15. Method according to any of claims 10 to 14,
**characterised in that**
in the phase of the load shut-down of the fuel cell (2) and/or in a phase in which the fuel cell (2) does not require any oxidising agent, the cross-section (Q) of the expander (11) is closed.

## Revendications

1. Dispositif pour alimenter une pile à combustible (2) en agent oxydant, doté d'une conduite d'amenée (7) menant vers la chambre de cathode (3) de la pile à combustible (2), un compresseur (8) étant relié à ladite conduite d'amenée, et d'une conduite d'évacuation (13) quittant la chambre de cathode (3), un extenseur (11) étant relié à ladite conduite d'évacuation, ainsi que d'une conduite de dérivation (14) s'étendant entre une sortie (81) du compresseur (8) et une entrée de l'extenseur (11) et contournant la pile à combustible (2), un premier élément de résistance à l'écoulement (15) étant disposé dans ladite conduite de dérivation, **caractérisé en ce qu'**un dispositif de recirculation (17) pour remettre en circulation un agent oxydant est dérivé de la conduite d'alimentation (7) dans la direction d'écoulement de l'agent oxydant après le compresseur (8) et débouche à nouveau dans la conduite d'alimentation (7) avant le compresseur (8).

2. Dispositif selon la revendication 1, **caractérisé en ce que** l'extenseur est une turbine (11) dotée d'un dispositif de guidage variable pour turbines.

3. Dispositif selon la revendication 1 ou la revendication 2, **caractérisé en ce qu'**un deuxième élément de résistance à l'écoulement (19) placé dans le dispositif de recirculation (17) pour remettre en circulation un agent oxydant est ouvert au moins temporairement dans une phase de mise en température de la pile à combustible (2) et / ou au moins temporairement dans une phase de marche à vide de la pile à combustion (2).

4. Dispositif selon l'une quelconque des revendications précédentes, **caractérisé en ce que** le premier élément de résistance à l'écoulement (15) disposé dans la conduite de dérivation (14) est ouvert au moins temporairement dans une phase de mise en température de la pile à combustion (2) et / ou au moins temporairement dans une phase de marche à vide de la pile à combustion (2).

5. Dispositif selon l'une quelconque des revendications précédentes, **caractérisé en ce qu'**en cas d'une coupure de charge de la pile à combustible (2) ou dans une phase dans laquelle la pile à combustible (2) ne nécessite pas d'agent oxydant, l'extenseur (11) est fermé.

6. Dispositif selon la revendication 5, **caractérisé en ce que** le compresseur (8) peut fonctionner dans un état de fonctionnement du pompage du compresseur lors d'une coupure de charge de la pile à combustible (2) ou dans une phase dans laquelle la pile à combustible (2) ne nécessite pas d'agent oxydant ou seulement en très faible quantité.

7. Dispositif selon la revendication 6, **caractérisé en ce que** dans un état de fonctionnement du pompage de compresseur les volumes existants d'agent oxydant avant et après le compresseur (8) sont adaptés au pompage contrôlable du compresseur, en particulier par un dispositif de recirculation servant à la recirculation du gaz de cathode évacué de la chambre de cathode (3) dans la chambre de cathode (3).

8. Dispositif selon l'une quelconque des revendications précédentes, **caractérisé en ce que** des valeurs de vitesse de rotation spécifiques du compresseur (8) et des réglages spécifiques d'une section transversale (Q) de l'extenseur (11) sont affectées aux états de fonctionnement de la pile à combustible (2) définis par les paramètres de pression d'oxydation et de débit massique d'agent oxydant en vue d'une amélioration du rendement de la pile à combustible (2) et ces affectations sont représentées dans un diagramme qui est stocké en mémoire dans une unité de commande et / ou de réglage (23) du dispositif (6).

9. Dispositif selon l'une quelconque des revendications précédentes, **caractérisé en ce que** les valeurs de vitesse de rotation spécifiques du compresseur (8) adaptées pour améliorer le rendement de la pile à combustible (2) pour les états de fonctionnement de la phase de mise en température et / ou de la phase de marche à vide et / ou de la phase de coupure de charge et / ou de la phase dans laquelle la pile à combustible (2) ne nécessite aucun agent oxydant et les réglages spécifiques de la section transversale (Q) de l'extenseur (11) sont représentés dans un diagramme qui est stocké en mémoire dans une unité de commande et / ou de réglage (23) du dispositif (6).

10. Procédé pour alimenter une pile à combustible en agent oxydant selon la revendication 1, **caractérisé en ce que** la conduite de dérivation (14) et / ou un dispositif de recirculation (17) pour remettre en circulation un agent oxydant est ouvert(e) au moins partiellement dans des états de fonctionnement spécifiques de la pile à combustible (2).

11. Procédé selon la revendication 10, **caractérisé en ce que** la conduite de dérivation (14) et / ou le dispositif de recirculation (17) sont ouverts pendant la phase de mise en température de la pile à combustible (2).

12. Procédé selon la revendication 10 ou la revendication 11, **caractérisé en ce que** la conduite de dérivation (14) et / ou le dispositif de recirculation (17) pour remettre en circulation un agent oxydant sont ouverts pendant la phase de marche à vide de la pile à combustible (2).

13. Procédé selon l'une quelconque des revendications 10 à 12, **caractérisé en ce que** la conduite de dérivation (14) et / ou le dispositif de recirculation (17) pour remettre en circulation un agent oxydant sont ouverts en cas de coupure de charge de la pile à combustible (2) ou dans une phase dans laquelle la pile à combustible (2) ne nécessite aucun agent oxydant.

14. Procédé selon l'une quelconque des revendications 10 à 13, **caractérisé en ce que** dans les états de fonctionnement spécifiques de la pile à combustible (2) les valeurs de vitesse de rotation du compresseur (8) affectées pour l'amélioration du rendement de la pile à combustible (2) et les sections transversales (Q) de l'extenseur (11) provenant d'un diagramme stocké en mémoire dans une unité de commande et / ou de réglage (23) servent à régler le point de fonctionnement nécessaire de la pile à combustible (2).

15. Procédé selon l'une quelconque des revendications 10 à 14, **caractérisé en ce que** dans la phase de coupure de charge de la pile à combustible (2) et / ou dans une phase dans laquelle la pile à combustible (2) ne nécessite aucun agent oxydant, la section transversale (Q) de l'extenseur (11) est fermée.
